(19) **Europäisches Patentamt**

**European Patent Office**

**Office européen des brevets**

(11) **EP 1 500 562 B1**

(12) **EUROPEAN PATENT SPECIFICATION**

(45) Date of publication and mention
of the grant of the patent:
**13.09.2006  Bulletin 2006/37**

(51) Int Cl.:
***B60R 21/34*** *(2006.01)*

(21) Application number: **04017114.2**

(22) Date of filing: **20.07.2004**

(54) **Collision protection apparatus of vehicle**

Aufprallschutzeinrichtung eines Fahrzeugs

Appareil de protection contre les collisions pour véhicule

(84) Designated Contracting States:
**DE FR GB**

(30) Priority: **24.07.2003   JP 2003278936**

(43) Date of publication of application:
**26.01.2005   Bulletin 2005/04**

(73) Proprietor: **Toyota Jidosha Kabushiki Kaisha
Toyota-shi, Aichi 471-8571 (JP)**

(72) Inventor: **Niimi, Yoshikazu
Toyota-shi,
Aichi 471-8571 (JP)**

(74) Representative: **Winter, Brandl, Fürniss, Hübner
Röss, Kaiser,
Polte Partnerschaft Patent- und
Rechtsanwaltskanzlei
Alois-Steinecker-Strasse 22
85354 Freising (DE)**

(56) References cited:
**DE-A- 10 141 730          US-A- 4 249 632
US-A1- 2001 045 981**

**Description**

BACKGROUND OF THE INVENTION

Field of the Invention

The present invention relates to a collision protection apparatus of a vehicle for protecting a pedestrian or a bicycle or motorcycle rider in the event of a collision between the vehicle and the pedestrian, the bicycle, or the motorcycle.

Description of the Related Art:

A conventionally known system of a vehicle for protecting a pedestrian in the event of a collision between the vehicle and the pedestrian is configured as follows: when a bumper sensor detects a collision of the vehicle, and the speed of the vehicle detected by a vehicle speed sensor or obtained by means of a longitudinal vehicle acceleration sensor falls within a predetermined range, a hood of the vehicle is raised so as to protect the pedestrian struck by the vehicle by means of raising the hood (refer to, for example, JP 11-99907 A).

The above conventional system raises the hood always in a fixed manner in the event of a collision, irrespective of the nature of the collision between a vehicle and an object. Therefore, the conventional system has failed to sufficiently protect an object struck in a collision, such as a pedestrian, in a collision of a certain nature.

As another conventionally known system of a collision protection apparatus US 4,249,632 discloses a safety device in form of a mechanism for raising the rear of the front hood, which mechanism can be triggered by a sensor intallation arranged in the zone of the front bumper of the vehicle for detection of a collision with a pedestrian. Upon detection of a collision, the mechanism shall raise the front hood from a rest position to an impact position in which the potential for contact between the pedestrian's head and the windshield is reduced.

Furthermore, a collision protection apparatus according to the preamble of claim 1 is shown and described in DE 1014730 A1.

SUMMARY OF THE INVENTION

Starting out from DE 101 41 730 A1, an object of the present invention is to provide an improved collision protection apparatus of a vehicle for appropriately protecting a pedestrian or a bicycle or motorcycle rider in the event of a collision between the vehicle and the pedestrian, the bicycle, or the motorcycle.

This object is achieved by a collision protection apparatus of a vehicle comprising a hood actuator for displacing upward at least a portion of a hood of the vehicle; and hood displacement control means for, in the event of a collision between the vehicle and an object, controlling the hood actuator in accordance with the nature of the collision so as to displace the hood upward in a manner corresponding to the nature of the collision, wherein the hood actuator can independently displace upward right and left portions of the hood located on opposite sides of a center axis of the vehicle, and front and rear portions of the hood located along the center axis of the vehicle.

Preferably, the hood actuator can tilt the hood in various directions.

Preferably, the hood displacement control means comprises drop position estimation means for estimating a position on the hood where the object will drop in the event of the collision between the vehicle and the object; and actuator control means for controlling the hood actuator so as to displace upward the hood at a portion corresponding to the estimated drop position. Preferably, the hood displacement control means comprises moving-direction estimation means for estimating a moving direction of the object in the event of the collision between the vehicle and the object; and actuator control means for controlling the hood actuator so as to tilt the hood along the estimated moving direction.

In the event of a collision between the vehicle the an object, the thus-configured collision protection apparatus of the present invention operates such that the hood displacement control means displaces the hood upward in a manner corresponding to the nature of the collision. For example, the hood displacement control means displaces upward a portion of the hood corresponding to a position where the object is expected to drop, or displaces the hood such that the hood is tilted along a moving direction of the object. Thus, in the event of a collision between the vehicle and a pedestrian, a bicycle, or a motorcycle, appropriate protection can be provided to the pedestrian or the bicycle or motorcycle rider; i.e., an object struck in a collision. In many cases, upward displacement of merely a portion of the hood will suffice, so that the upward displacement of the hood can be effected quickly.

BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:

FIG. 1 is a schematic plan view showing a front portion of a vehicle equipped with a collision protection apparatus according to any of first to third embodiments of the present invention;
FIG. 2 is a block diagram of an electronic control apparatus for controlling the vehicle;
FIG. 3 is a flowchart of a hood control program which is executed by an electronic control unit of FIG. 2 in the first embodiment;
FIG. 4A is a view showing a condition of capturing an image of a pedestrian by means of a camera unit;
FIG. 4B is a captured image of the pedestrian;
FIG. 5 is a characteristic diagram for identifying an object by means of a bumper sensor output and a relative speed;
FIG. 6 is an explanatory diagram for explaining the movement over a hood of a human struck in a collision;
FIGS. 7A and 7B are explanatory views for explaining manners of displacement of the hood of the vehicle according to the first embodiment;
FIG. 8 is a flowchart of a hood control program which is executed by the electronic control unit of FIG. 2 in the second embodiment;
FIG. 9 is an explanatory view for explaining a manner of displacement of the hood of the vehicle according to the second embodiment;
FIG. 10 is a flowchart of a hood control program which is executed by the electronic control unit of FIG. 2 in the third embodiment; and
FIG. 11 is an explanatory view for explaining a manner of displacement of the hood of the vehicle according to the third embodiment.

## DESCRIPTION OF THE PREFERRED EMBODIMENTS

a. First Embodiment

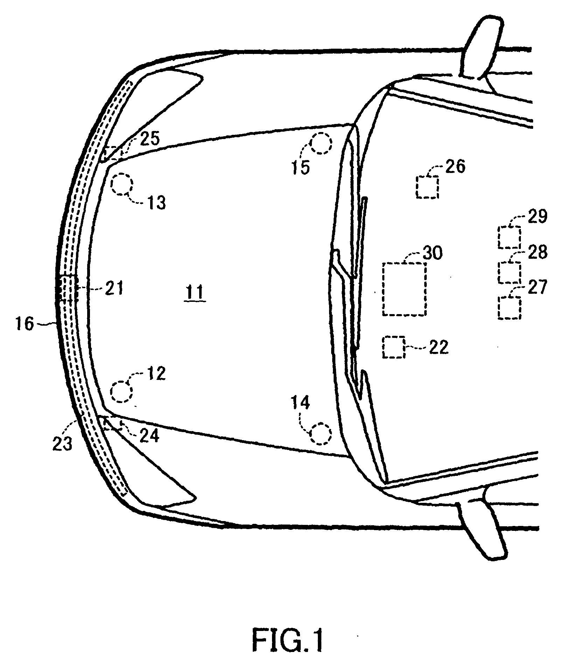

A first embodiment of the present invention will be described with reference to the drawings. FIG. 1 schematically shows a front portion of a vehicle. Hood actuators 12 to 15, which are fixedly attached to a vehicle body member, are located at left front, right front, left rear, and right rear corner positions under the corresponding four corners of a hood 11, which covers an engine compartment of the vehicle. Each of the hood actuators 12 to 15 includes an electric motor or a hydraulic device. The electric motors or hydraulic devices can operate independently, so that the hood 11 can be displaced upward (raised) independently at left front, right front, left rear, and right rear portions.

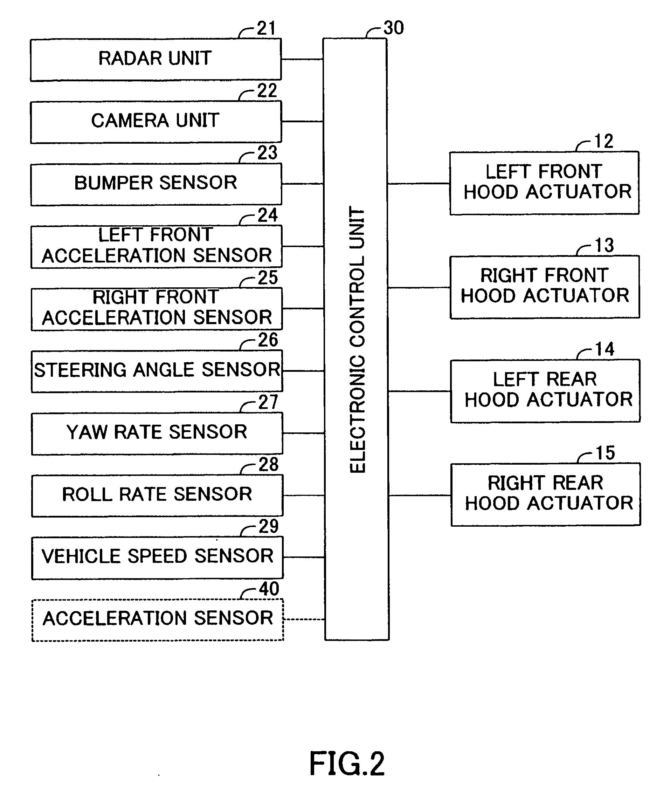

Next will be described an electric control apparatus for controlling the left front, right front, left rear, and right rear hood actuators 12 to 15, respectively. As shown in FIGS. 1 and 2, the electric control apparatus includes a radar unit 21, a camera unit 22, a bumper sensor 23, a left front acceleration sensor 24, a right front acceleration sensor 25, and a steering angle sensor 26. The electric control apparatus further includes, as needed, a yaw rate sensor 27, a roll rate sensor 28, and a vehicle speed sensor 29.

The radar unit 21 is disposed at a front end portion of the vehicle. The radar unit 21 transmits millimeter waves, ultrasonic waves, or the like in the traveling direction of the vehicle and receives waves reflected from an object ahead, thereby detecting the distance to the object. The camera unit 22 is a CCD camera or the like disposed in the interior of the vehicle and facing frontward. The camera unit 22 is adapted to capture an image of a pedestrian, an obstacle, or the like that is present in the path of the vehicle. The bumper sensor 23 is an elongated displacement sensor (or an elongated load sensor) which has a length substantially equal to that of a bumper 16 attached to the front end portion of the vehicle. In the event of a collision between the bummer 16 and an object, the bumper sensor 23 outputs a signal indicative of a displacement BP of the bumper 16 (or a load BP imposed on the bumper 16). The left front and right front acceleration sensors 24 and 25 are attached to corresponding vehicle body members (not shown), which are located behind and in the vicinity of the bumper 16 at left-hand and right-hand positions, respectively. The acceleration sensors 24 and 25 detect accelerations G1 and G2, which are generated in the event of a collision between the bummer 16 and an object, and output signals indicative of the detected accelerations G1 and G2.

The steering angle sensor 26 detects a steering angle θh of an unillustrated steering wheel and outputs a signal indicative of the detected steering angle θh. The yaw rate sensor 27 detects the rate of yawing of the vehicle body and outputs a signal indicative of the detected yaw rate. The roll rate sensor 28 detects the rate of rolling of the vehicle body and outputs a signal indicative of the detected roll rate. The vehicle speed sensor 29 detects a vehicle speed V and outputs a signal indicative of the detected vehicle speed V.

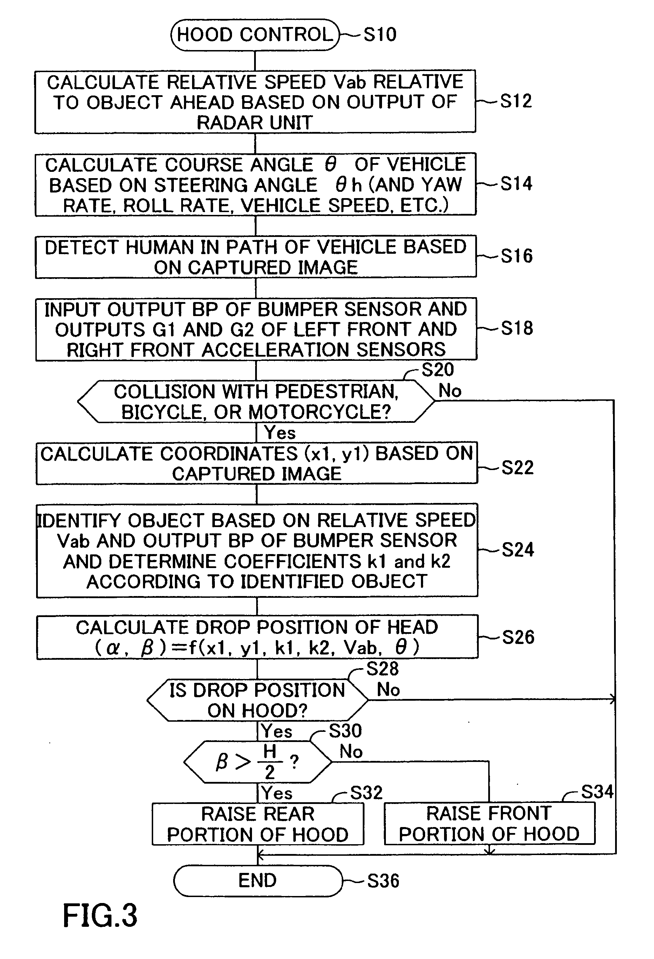

These sensors 21 to 29 are connected to an electronic control unit 30, whose main component is a microcomputer composed of a CPU, ROM, RAM, a timer, among other elements. The electronic control unit 30 executes a hood control program of FIG. 3 at predetermined short intervals, thereby controlling the left front, right front, left rear, and left right hood actuators 12 to 15.

Next, operation of the thus-configured collision protection apparatus of the first embodiment will be described. The electronic control unit 30 repeatedly executes the hood control program at predetermined short intervals. The hood control program starts from step S10 of FIG. 3. In step S12, the electronic control unit 30 calculates a relative speed Vab between the vehicle and an object ahead. Specifically, the distance between the vehicle and the object ahead that is detected by the radar unit 21 is stored as a current distance $L_{new}$, which indicates a distance detected during the current execution of the hood control program. The current distance $L_{new}$ is subtracted from a distance that was detected during the last execution of the hood control program (hereinafter referred to as the last distance $L_{old}$). The thus-obtained difference "$L_{old} - L_{new}$" is divided by an execution interval $\Delta t$ of the hood control program, thereby yielding the relative speed Vab between the vehicle and the object ahead (= $(L_{old} - L_{new})/\Delta t$).

Next, in step S14, on the basis of the steering angle θh detected by the steering angle sensor 26, a course angle θ of the vehicle is calculated. In this case, the course angle θ of the vehicle is the angle between the traveling direction of the vehicle and the center axis of the vehicle, which extends longitudinally; i.e., in the front-rear direction of the vehicle. Notably, the course angle θ of the vehicle may be corrected on the basis of the yaw rate detected by the yaw rate sensor 27, the roll rate detected by the roll rate sensor 28, or the vehicle speed detected by the vehicle speed sensor 29. Alternatively, the course angle θ may be calculated by use of the yaw rate, the roll rate, and the vehicle speed. Next, in step S16, the camera unit 22 is caused to capture an image of a view ahead of the vehicle. Image data indicative of the captured image are analyzed. In the analysis, the electronic control unit 30 performs image recognition for a head of a human, thereby judging whether or not a human is present in the path of the vehicle. Specifically, the electronic control unit 30 judges whether or not a pedestrian or a bicycle or motorcycle rider is present in the path of the vehicle.

After execution of processing of step S16, in step S18, the electronic control unit 30 inputs signals BP, G1, and G2 from the bumper sensor 23 and the left front and right front acceleration sensors 24 and 25, respectively. In step S20, on the basis of results of detection of a human in step S16 and the signals BP, G1, and G2 from the bumper sensor 23 and the left front and right front acceleration sensors 24 and 25, the electronic control unit 30 judges whether or not the vehicle has collided with an object including a human; i.e., whether or not the vehicle has collided with a pedestrian, a bicycle, or a motorcycle. In other words, the electronic control unit 30 judges whether or not the following two conditions are satisfied; (1) a human (a pedestrian or a bicycle or motorcycle rider) having been detected by means of processing in step S16, and (2) the signals BP, G1, and G2 from the bumper sensor 23 and the left front and right front acceleration sensors 24 and 25 indicating a collision with a pedestrian, a bicycle, or a motorcycle. In this case, the speed of a displacement of the bumper 16, the acceleration of a displacement of the bumper 16, and the like are calculated on the basis of the displacement BP of the bumper 16 (or the load BP imposed on the bumper 16) detected by the bumper sensor 23. The electronic control unit 30 judges whether or not such physical quantities as the displacement BP (or load BP), the displacement speed, the displacement acceleration, and the left front and right front accelerations G1 and G2 fall within respectively predetermined ranges indicative of a collision with a pedestrian, a bicycle, or a motorcycle. Notably, step S16 for judging whether or not a human is present becomes unnecessary when, in order to accurately judge whether or not the bumper 16 has collided with a pedestrian, a bicycle, or a motorcycle, step S20 employs tight ranges that are respectively compared with the displacement BP, the displacement speed, the displacement acceleration, the left front and right front accelerations G1 and G2, and the like.

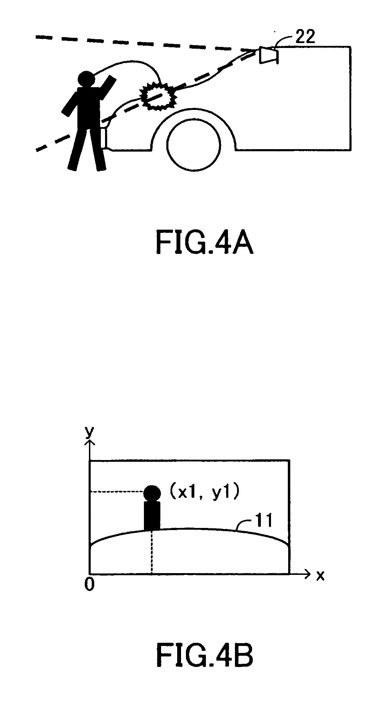

In step S20, when the electronic control unit 30 judges that no collision has occurred, the electronic control unit 30 makes a "No" judgment and proceeds to step S36 without execution of processings of steps S22 to S34. In step S36, the electronic control unit 30 ends execution of the hood control program. By contrast, when a collision has occurred, the electronic control unit 30 makes a "Yes" judgment in step S20, and proceeds to step S22 and beyond. In step S22, on the basis of the image captured in step S16, the electronic control unit 30 calculates coordinates (x1, y1) indicative of the position of a pedestrian or a bicycle or motorcycle rider struck by a front end portion of the vehicle. As shown in FIG. 4(A), the camera unit 22 captures an image of a view ahead of the vehicle from an upper portion of the interior of the vehicle. As shown in FIG. 4(B), the electronic control unit 30 determines the lateral position and the height, or coordinates (x1, y1), of the head of the human detected through processing in step S16.

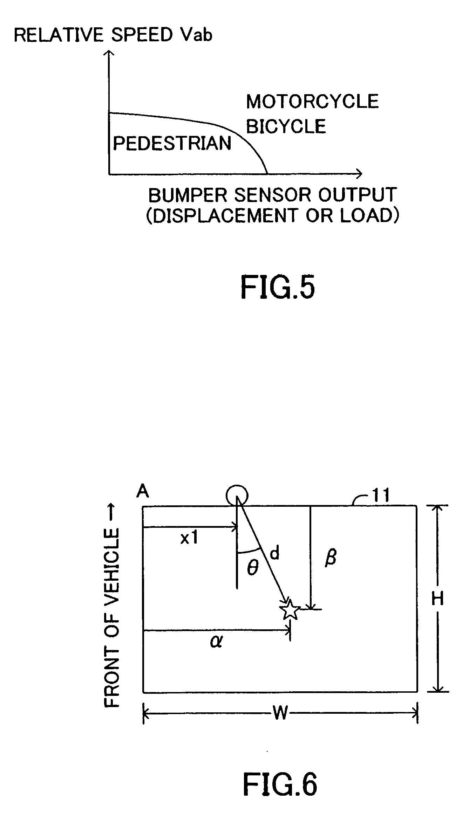

Next, in step S24, on the basis of the displacement BP (or load BP) of the bumper 16 received from the bumper sensor 23 in step S18 and the relative speed Vab calculated in step S12, the electronic control unit 30 identifies the object struck in the collision and determines coefficients k1 and k2, which are used in later calculation, in accordance with the identified object. In this case, the electronic control unit 30 judges whether the object struck in the collision is a pedestrian, a bicycle, or a motorcycle, while referring to the table of FIG. 5, which specifies identification regions by means of the relationship between the relative speed Vab and the displacement BP (or load BP) received from the bumper sensor 23. Specifically, the electronic control unit 30 judges whether a point determined by the relative speed Vab and the detected displacement BP (or load BP) of the bumper 16 falls within the region corresponding to a pedestrian or within the remaining region (a region corresponding to a bicycle or motorcycle), thereby identifying the object struck in the collision. Coefficients k1 and k2 assume predetermined values that are greater for a bicycle or motorcycle than for a pedestrian.

After execution of processing of step S24, in step S26, the electronic control unit 30 calculates an estimated

drop position ($\alpha$, $\beta$) of the human (a pedestrian or a bicycle or motorcycle rider) by use of the calculated coordinates (x1, y1), the determined coefficients k1 and k2, the calculated relative speed Vab, and the course angle $\theta$. As shown in FIG. 6, the estimated drop position ($\alpha$, $\beta$) is represented by a lateral distance and a longitudinal distance as measured from the base point located at a left front end position A of the hood 11. The estimated drop position ($\alpha$, $\beta$) can be calculated by use of, for example, the following Eqs. (1) to (3).

$$d = k1 \cdot y1 + k2 \cdot Vab \ ... \ (1)$$

$$\alpha = x1 + d \cdot \sin\theta \qquad ... \ (2)$$

$$\beta = d \cdot \cos\theta \qquad ... \ (3)$$

The above Eqs. (1) to (3) indicate that a distance d over which the human is knocked increases with the height and relative speed Vab of the human and that a bicycle or motorcycle rider is knocked over a longer distance d than is a pedestrian. On the basis of the distance d with the course angle $\theta$ taken into consideration, the estimated drop position ($\alpha$, $\beta$) is calculated.

After calculation of the estimated drop position ($\alpha$, $\beta$), in step 28, the electronic control unit 30 judges whether or not the estimated drop position ($\alpha$, $\beta$) of the human is on the hood 11, by means of judging whether or not $\alpha$ and $\beta$ satisfy relationships (4) and (5) shown below.

$$0 \leq \alpha \leq W \ ... \ (4)$$

$$0 \leq \beta \leq H \cdot ... \ (5)$$

where W is the width of the hood 11, and H is the length of the hood 11 as measured along the center axis of the vehicle.

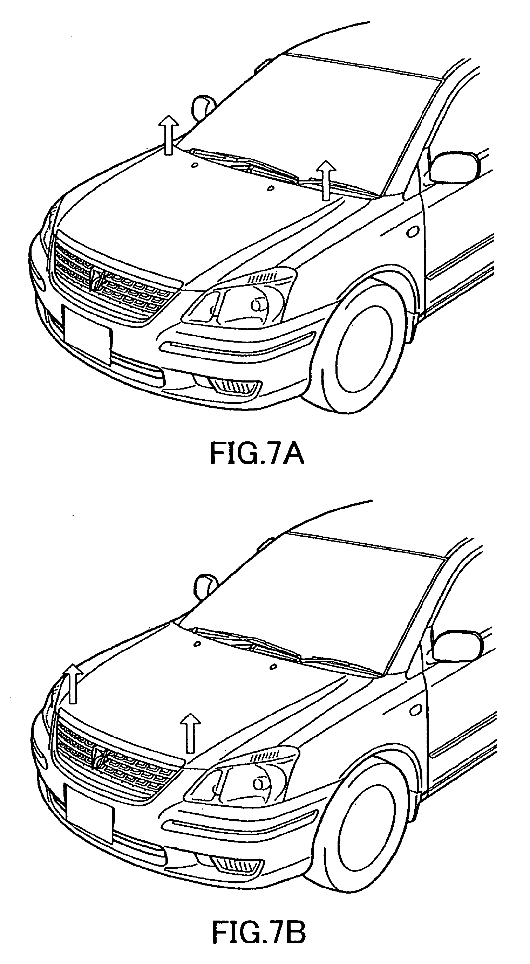

In the case where the inequalities (4) and (5) are satisfied, and the estimated drop position ($\alpha$, $\beta$) is on the hood 11, the electronic control unit 30 makes a "Yes" judgment in step S28 and proceeds to step S30. In step S30, the electronic control unit 30 compares the $\beta$ value, which indicates the estimated longitudinal drop position of the human, with H/2 to thereby judge whether or not the human will drop on the hood 11 on the rear side of the longitudinal center of the hood 11. When $\beta >$ H/2; i.e., when the human is expected to drop on the hood 11 on the rear side of the longitudinal center of the hood 11, the electronic control unit 30 makes a "Yes" judgment in step S30 and performs processing of step S32. In step S32, as shown in FIG. 7(A), the electronic control unit 30 activates the left rear and right rear hood actuators 14 and 15 such that a rear portion of the hood 11 is displaced upward, or raised. When $\beta \leq$ H/2; i.e., when the human is expected to drop on the hood 11 on the front side of the longitudinal center of the hood 11, the electronic control unit 30 makes a "No" judgment in step S30 and performs processing of step S34. In step S34, as shown in FIG. 7(B), the electronic control unit 30 activates the left front and right front hood actuators 12 and 13 such that a front portion of the hood 11 is displaced upward, or raised.

In the case where the inequality (4) or (5) is not satisfied, and the estimated drop position ($\alpha$, $\beta$) is not on the hood 11, the electronic control unit 30 makes a "No" judgment in step S28 and proceeds to step S36 without execution of processing of steps S30 to S34. In step S36, the electronic control unit 30 ends execution of the hood control program. Therefore, in this case, upward displacement of the hood 11; i.e., raising of the hood 11, is not performed. Notably, in this case, an unillustrated program is executed so as to preferentially effect protection measures for vehicle occupants, such as deployment of an airbag.

As described above, according to the first embodiment, the estimated drop position ($\alpha$, $\beta$) of the human is calculated on the basis of the position (x1, y1) of the head of the human and such factors in the event of a collision as the relative speed Vab, the course angle $\theta$ of the vehicle, and the classification of the human; i.e., a pedestrian or a bicycle or motorcycle rider. A portion(s) of the hood 11 to be raised is determined in accordance with the estimated drop position ($\alpha$, $\beta$). Thus, in the event of a collision between a vehicle and a pedestrian, a bicycle, or a motorcycle, the first embodiment can appropriately protects the pedestrian or the bicycle or motorcycle rider; i.e., an object struck in a collision. In many cases, upward displacement of merely a portion of the hood 11 will suffice, so that the upward displacement can be effected quickly.

In the case where the estimated drop position $(\alpha, \beta)$ is on the hood 11, the above-described first embodiment determines the position on the hood 11, merely with respect to the longitudinal direction. However, in place of or in addition to such a manner of determination, the position on the hood 11 may be determined with respect to the lateral direction. For example, the following control may be performed: when comparison between the estimated lateral position $\alpha$ and the half value W/2 of the width of the hood 11 indicates that the estimated drop position $(\alpha, \beta)$ of the human is on a left half portion of the hood 11, the left front and left rear hood actuators 12 and 14 are activated to thereby displace upward (raise) a left portion of the hood 11; and when the comparison indicates that the estimated drop position $(\alpha, \beta)$ of a human is on a right half portion of the hood 11, the right front and right rear hood actuators 13 and 15 are activated to thereby displace upward (raise) a right portion of the hood 11. Furthermore, the position on the hood 11 may be determined with respect to both longitudinal and lateral directions. In this case, any one or two of the left front, right front, left rear, and right rear hood actuators 12 to 15 are activated.

b. Second Embodiment

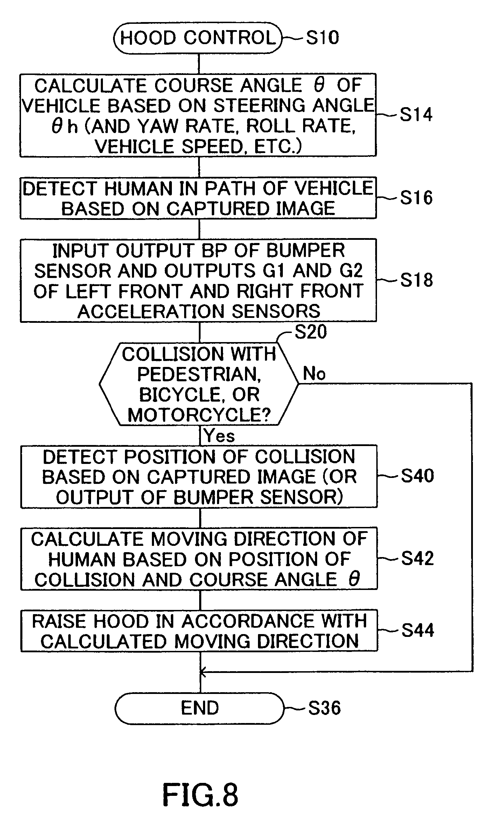

Next, a second embodiment of the present invention will be described. The second embodiment is configured in a manner similar to that for the first embodiment shown in FIGS. 1 and 2. However, the electronic control unit 30 executes a hood control program of FIG. 8 in place of the hood control program of FIG. 3. The hood control program of FIG. 8 differs from that of FIG. 3 in that processing of step S12 in FIG. 3 is eliminated and that processings of steps S40 to S44 replace the processings of steps S22 to S34 in FIG. 3. The operation of the second embodiment is described below. However, only features different from those of the first embodiment will be described.

When, in step S20, the electronic control unit 30 makes a "Yes" judgment; i.e., the electronic control unit 30 judges that the vehicle has collided with a pedestrian, a bicycle, or a motorcycle, the electronic control unit 30 proceeds to step S40 and detects the position of a collision on the bumper 16. Specifically, on the basis of an image captured by the camera unit 22, a lateral position of collision (which corresponds to the coordinate x1 in the first embodiment) is detected. In the case where the signal BP from the bumper sensor 23 indicates the position of a displacement of the bumper 16 caused by the collision, the position of the collision may be detected on the basis of the signal BP from the bumper sensor 23.

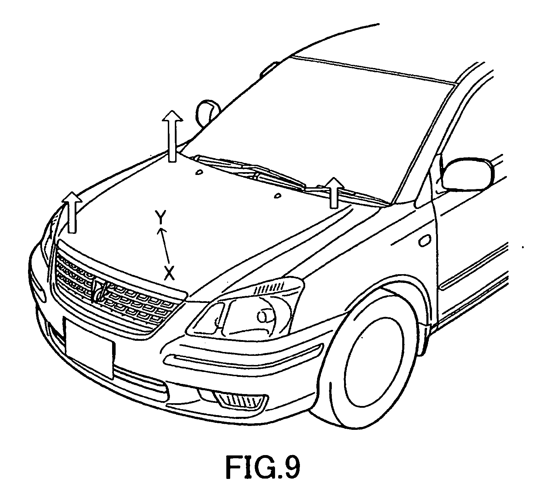

Next, in step S42, on the basis of the thus-detected position of the collision and the course angle $\theta$ of the vehicle calculated in step S14, the electronic control unit 30 calculates a direction along which the human who has been struck in the collision moves on the hood 11. In step S44, on the basis of the thus-calculated moving direction of the human on the hood 11, the electronic control unit 30 causes the left front, right front, left rear, and right rear hood actuators 12 to 15 to be activated such that the hood 11 is tilted along the moving direction. For example, as shown in FIG. 9, when X represents the position of the collision, and Y represents the moving direction, the hood actuators 12 to 15 are activated so as to tilt the hood 11 along the moving direction such that the hood 11 is raised the highest at a portion that is located substantially along the moving direction Y and the farthest away from the position X. In this case, the right rear hood actuator 15 raises the hood 11 to the highest level; the right front hood actuator 13 raises the hood 11 to the next highest level; and the left rear hood actuator 14 raises the hood 11 to the lowest level.

As described above, according to the second embodiment, in the event of a collision, the moving direction of a human, who is an object that has been struck, is calculated; and the hood 11 is tilted along the calculated moving direction. Thus, in the event of a collision between a vehicle and a pedestrian, a bicycle, or a motorcycle, the second embodiment can also appropriately protects the pedestrian or the bicycle or motorcycle rider; i.e., an object struck in a collision. In many cases, upward displacement of merely a portion of the hood 11 will suffice, so that the upward displacement of the hood 11 can be effected quickly.

c. Third Embodiment

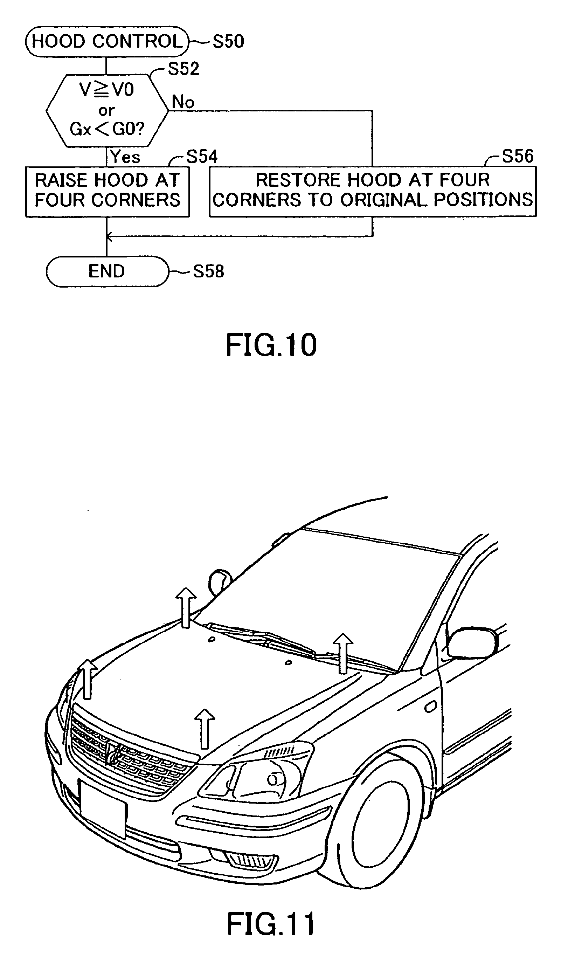

Next, a third embodiment of the present invention will be described. The third embodiment is configured in a manner similar to that for the first embodiment shown in FIGS. 1 and 2. However, in addition to the sensors 21 to 29 used in the first embodiment, an acceleration sensor 40 is provided. The acceleration sensor 40 is adapted to detect a longitudinal acceleration Gx of the entire vehicle. The electronic control unit 30 executes a hood control program of FIG. 10 in place of the hood control program of FIG. 3. The operation of the third embodiment is described below. However, only features different from those of the first embodiment will be described.

According to the third embodiment, the electronic control unit 30 starts executing the hood control program from step S50 and repeatedly executes processing consisting of steps S50 to S58 at predetermined short intervals. In step S52, the electronic control unit 30 judges whether or not the vehicle speed V detected by the vehicle sensor 29 is equal to or higher than a predetermined vehicle speed V0 or whether or not a longitudinal acceleration Gx detected by the acceleration sensor 40 is less than a predetermined acceleration G0. When the detected vehicle speed V is equal to or higher than the predetermined vehicle speed V0 or when the longitudinal acceleration Gx is less than the predetermined acceleration G0, the electronic control unit 30 makes a "Yes" judgment in step S52 and proceeds to step S54. In step S54, the electronic control unit 30 causes the left front, right front, left rear, and right rear hood actuators 12 to 15 to be simultaneously activated so as to raise the hood 11 simultaneously at the corresponding four portions. As a result, as shown in FIG. 11, the entire hood 11 is raised to a predetermined height.

Meanwhile, when the detected vehicle speed V is lower than the predetermined vehicle speed V0, and the detected acceleration Gx is not less than the predetermined acceleration G0, the electronic control unit 30 makes a "No" judgment in step S52 and proceeds to step S56. In step S56, the electronic control unit 30 causes the left front, right front, left rear, and right rear hood actuators 12 to 15 to be activated so as to restore the four portions of the hood 11 to their original positions. As a result, the hood 11 is returned to the original position

As is understood from the above description, according to the third embodiment, when the vehicle runs at a predetermined speed or higher or is decelerated abruptly, the hood 11 is raised. Thus, even when protection control for raising the hood 11 is disabled, or raising of the hood 11 is delayed, due to a fault of any of the sensors 21 to 28, the third embodiment can reliably protect a pedestrian or a bicycle or motorcycle rider struck in a collision. Therefore, the third embodiment may be combined with the first or second embodiment so as to cope with a case where the operation according to the first or second embodiment is disabled due to a fault of any of the sensors 21 to 28. Since the hood 11 is lowered when the vehicle is halted, design is not impaired.

While the present invention has been described with reference to the first through third embodiments, the present invention is not limited thereto, but may be modified as appropriate without departing from the scope of the invention as defined by the claims.

For example, in the first through third embodiments, the bumper sensor 23 is a displacement sensor for detecting a displacement of the bumper 16 or a load sensor for detecting a load imposed on the bumper 16. However, the bumper sensor 23 may be replaced with a sensor for detecting the speed or acceleration of a deformation of the bumper 16 or a related physical quantity. Also, the left front and right front acceleration sensors 24 and 25 may be replaced with displacement sensors for detecting a displacement of a rear end portion of the bumper 16 or load sensors for detecting a load imposed on a rear end portion of the bumper 16.

## Claims

1.    A collision protection apparatus of a vehicle, comprising:

   a hood actuator (12 - 15) for displacing upward at least a portion of a hood (11) of the vehicle; and
   hood displacement control means for, in the event of a collision between the vehicle and an object, controlling the hood actuator (12 - 15) in accordance with the nature of the collision so as to displace the hood (11) upward in a manner corresponding to the nature of the collision, **characterized in that**
   the hood actuator (12 - 15) is capable of independently displacing upward right and left portions of the hood (11) located laterally on opposite sides of a center axis of the vehicle, and
   front and rear portions of the hood (11) located along a center axis of the vehicle.

2.    A collision protection apparatus of a vehicle according to claim 1, wherein the hood actuator (12 - 15) is capable of tilting the hood (11) in various directions.

3.    A collision protection apparatus of a vehicle according to claim 1 or 2, wherein the hood displacement control means comprises:

   drop position estimation means for estimating a position on the hood (11) where the object will drop in the event of the collision between the vehicle and the object; and
   actuator control means for controlling the hood actuator (12 - 15) so as to displace upward the hood (11) at a portion corresponding to the estimated drop position.

4.    A collision protection apparatus of a vehicle according to claim 1 or 2, wherein the hood displacement control means comprises:

   moving-direction estimation means for estimating a moving direction of the object in the event of the collision between the vehicle and the object; and

actuator control means for controlling the hood actuator (12 - 15) so as to tilt the hood (11) along the estimated moving direction.

**Patentansprüche**

1. Eine Aufprallschutzvorrichtung für ein Fahrzeug, die Folgendes aufweist:

   ein Motorhaubenstellglied (12-15), um zumindest einen Abschnitt einer Motorhaube (11) nach oben zu verschieben; und
   eine Einrichtung zum Steuern der Haubenverlagerung, um das Motorhaubenstellglied (12-15) in dem Fall eines Zusammenstoßes zwischen dem Fahrzeug und einem Objekt in Übereinstimmung mit der Art des Zusammenstoßes so zu steuern, dass die Haube (11) nach oben verlagert wird,

   **dadurch gekennzeichnet, dass**
   das Motorhaubenstellglied (12-15) dazu fähig ist, zumindest linke und rechte Abschnitte der Motorhaube, die in der Querrichtung an unterschiedlichen Seiten einer Mittelachse des Fahrzeugs angeordnet sind, und
   vordere und hintere Abschnitte der Haube (11), die entlang einer Mittelachse des Fahrzeugs angeordnet sind, unabhängig voneinander nach oben zu verschieben.

2. Aufprallschutzvorrichtung eines Fahrzeugs nach Anspruch 1, wobei das Motorhaubenstellglied (12-15) dazu fähig ist, die Motorhaube (11) in unterschiedliche Richtungen zu kippen.

3. Aufprallschutzvorrichtung eines Fahrzeugs nach Anspruch 1 oder 2, wobei die Einrichtung zur Verlagerung der Motorhaube Folgendes aufweist:

   Eine Einrichtung zum Abschätzen einer Aufschlagposition, um eine Position auf der Haube abzuschätzen, auf der das Objekt in dem Fall der Kollision zwischen dem Fahrzeug und dem Objekt aufschlägt; und
   eine Einrichtung zur Steuerung des Motorhaubenstellglieds, um das Motorhaubenstellglied (12-15) so zu steuern, dass die Motorhaube an einer Position nach oben verschoben wird, die der abgeschätzten Aufschlagposition entspricht.

4. Aufprallschutzvorrichtung eines Fahrzeugs nach Anspruch 1 oder 2, wobei die Einrichtung zur Steuerung der Verschiebung der Motorhaube Folgendes aufweist:

   eine Einrichtung zur Abschätzung der Bewegungsrichtung, um eine Bewegungsrichtung des Objekts in dem Fall der Kollision zwischen dem Fahrzeug und dem Objekt abzuschätzen; und
   eine Einrichtung zur Steuerung des Motorhaubenstellglieds (12-15), um die Motorhaube entlang der abgeschätzten Bewegungsrichtung zu kippen.

**Revendications**

1. Dispositif de protection en cas de collision pour un véhicule, comprenant :

   un actionneur pour capot (12 à 15) destiné à déplacer vers le haut au moins une partie d'un capot (11) du véhicule, et
   un moyen de commande de déplacement de capot destiné, dans le cas d'une collision entre le véhicule et un objet, à commander l'actionneur pour capot (12 à 15) selon la nature de la collision de façon à déplacer le capot (11) vers le haut d'une manière correspondant à la nature de la collision,

   **caractérisé en ce que**
   l'actionneur pour capot (12 à 15) peut déplacer indépendamment vers le haut les parties droite et gauche du capot (11) situées latéralement sur les côtés opposés d'un axe central du véhicule, et
   les parties avant et arrière du capot (11) situées le long d'un axe central du véhicule.

2. Dispositif de protection en cas de collision pour un véhicule selon la revendication 1, dans lequel l'actionneur pour capot (12 à 15) peut incliner le capot (11) dans diverses directions.

8

**3.** Dispositif de protection en cas de collision pour un véhicule selon la revendication 1 ou 2, dans lequel le moyen de commande de déplacement de capot comprend :

un moyen d'estimation de position de chute destiné à estimer une position sur le capot (11) où l'objet chutera dans le cas de la collision entre le véhicule et l'objet, et
un moyen de commande d'actionneur destiné à commander l'actionneur pour capot (12 à 15) de façon à déplacer vers le haut le capot (11) au niveau d'une partie correspondant à la position de chute estimée.

**4.** Dispositif de protection en cas de collision pour un véhicule selon la revendication 1 ou 2, dans lequel le moyen de commande de déplacement de capot comprend :

un moyen d'estimation de direction de déplacement destiné à estimer une direction de déplacement de l'objet dans le cas de la collision entre le véhicule et l'objet, et
un moyen de commande d'actionneur destiné à commander l'actionneur pour capot (12 à 15) de façon à incliner le capot (11) le long de la direction de déplacement estimée.

FIG.1

| | | |
|---|---|---|
| RADAR UNIT ⌐21 | | |
| CAMERA UNIT ⌐22 | | LEFT FRONT HOOD ACTUATOR ⌐12 |
| BUMPER SENSOR ⌐23 | | |
| LEFT FRONT ACCELERATION SENSOR ⌐24 | ELECTRONIC CONTROL UNIT ⌐30 | RIGHT FRONT HOOD ACTUATOR ⌐13 |
| RIGHT FRONT ACCELERATION SENSOR ⌐25 | | |
| STEERING ANGLE SENSOR ⌐26 | | LEFT REAR HOOD ACTUATOR ⌐14 |
| YAW RATE SENSOR ⌐27 | | |
| ROLL RATE SENSOR ⌐28 | | RIGHT REAR HOOD ACTUATOR ⌐15 |
| VEHICLE SPEED SENSOR ⌐29 | | |
| ACCELERATION SENSOR ⌐40 | | |

FIG.2

$$\text{(HOOD CONTROL)} \sim S10$$

CALCULATE RELATIVE SPEED Vab RELATIVE TO OBJECT AHEAD BASED ON OUTPUT OF RADAR UNIT — S12

CALCULATE COURSE ANGLE $\theta$ OF VEHICLE BASED ON STEERING ANGLE $\theta h$ (AND YAW RATE, ROLL RATE, VEHICLE SPEED, ETC.) — S14

DETECT HUMAN IN PATH OF VEHICLE BASED ON CAPTURED IMAGE — S16

INPUT OUTPUT BP OF BUMPER SENSOR AND OUTPUTS G1 AND G2 OF LEFT FRONT AND RIGHT FRONT ACCELERATION SENSORS — S18

COLLISION WITH PEDESTRIAN, BICYCLE, OR MOTORCYCLE? — S20 — No

Yes

CALCULATE COORDINATES (x1, y1) BASED ON CAPTURED IMAGE — S22

IDENTIFY OBJECT BASED ON RELATIVE SPEED Vab AND OUTPUT BP OF BUMPER SENSOR AND DETERMINE COEFFICIENTS k1 and k2 ACCORDING TO IDENTIFIED OBJECT — S24

CALCULATE DROP POSITION OF HEAD $(\alpha, \beta) = f(x1, y1, k1, k2, Vab, \theta)$ — S26

IS DROP POSITION ON HOOD? — S28 — No

Yes — S30

$\beta > \dfrac{H}{2}$ ? — No

Yes — S32

RAISE REAR PORTION OF HOOD

RAISE FRONT PORTION OF HOOD — S34

$$\text{(END)} \sim S36$$

# FIG.3

## FIG.4A

## FIG.4B

RELATIVE SPEED Vab

MOTORCYCLE

BICYCLE

PEDESTRIAN

BUMPER SENSOR OUTPUT
(DISPLACEMENT OR LOAD)

## FIG.5

A

FRONT OF VEHICLE ↑

x1

$\theta$

d

$\beta$

11

H

$\alpha$

W

## FIG.6

FIG.7A

FIG.7B

HOOD CONTROL — S10

CALCULATE COURSE ANGLE $\theta$ OF VEHICLE BASED ON STEERING ANGLE $\theta$ h (AND YAW RATE, ROLL RATE, VEHICLE SPEED, ETC.) — S14

DETECT HUMAN IN PATH OF VEHICLE BASED ON CAPTURED IMAGE — S16

INPUT OUTPUT BP OF BUMPER SENSOR AND OUTPUTS G1 AND G2 OF LEFT FRONT AND RIGHT FRONT ACCELERATION SENSORS — S18

S20 — COLLISION WITH PEDESTRIAN, BICYCLE, OR MOTORCYCLE? — No

Yes

DETECT POSITION OF COLLISION BASED ON CAPTURED IMAGE (OR OUTPUT OF BUMPER SENSOR) — S40

CALCULATE MOVING DIRECTION OF HUMAN BASED ON POSITION OF COLLISION AND COURSE ANGLE $\theta$ — S42

RAISE HOOD IN ACCORDANCE WITH CALCULATED MOVING DIRECTION — S44

END — S36

FIG.8

FIG.9

HOOD CONTROL — S50

S52
V ≧ V0
or
Gx < G0?

No

Yes — S54

RAISE HOOD AT
FOUR CORNERS

S56
RESTORE HOOD AT FOUR
CORNERS TO ORIGINAL POSITIONS

END — S58

## FIG.10

## FIG.11